# EUROPEAN PATENT APPLICATION

(11) **EP 2 500 849 A1**
(43) Date of publication of application: **19.09.2012**
(21) Application number: 11305308.6
(22) Date of filing: 18.03.2011
(51) Int. Cl.: G06Q 10/00

(54) **A method for auditing the value of a partial ticket change transaction**

(71) Applicant: Amadeus S.A.S., 06410 Biot (FR)
(72) Inventor: Mortagne, Guillaume, 06600, ANTIBES (FR); Angelini, Christophe, 06130, GRASSE (FR); Leon, Norbert, 06270, VILLENEUVE LOUBET (FR)
(74) Representative: Decobert, Jean-Pascal

(57) **Abstract**

The invention is for auditing the value of a change for at least one non used portion of an interline ticket in a networked travel reservation system including programmed processor performing receiving a request for a change for at least a non-used portion of an interline ticket; calculating the prorated amounts for the original itinerary (Refund) and both the original and new itineraries (Exchange); authorizing the change upon the validating airline ticket's balance being equal or greater than a predefined threshold; and triggering an event upon the validating airline ticket's balance being less than a predefined threshold.

## Description

### BACKGROUND OF THE INVENTION

### (1) Field of the Invention

The present invention relates to the field of airline reservations and ticketing. In particular the invention relates to the protection of the validating airline revenue in case of partial change on interline tickets, meaning that the passenger has already flown a portion of the ticket itinerary operated by a different airline and wants to change the non-used portion.

### (2) Description of Related Art

Today, booking tools give travel agents the possibility to perform on-line reservations, pricing and ticketing.

A passenger may want to book flights for a travel that no airline can provide by itself, as a single airline is not able to provide a route network, which covers the globe. Interlining has been created to enable the booking of an itinerary containing flights operated by different carriers, enabling the passenger to pay one single price (a.k.a. "fare"), in one currency, for the ticket covering the whole trip. Usually, a "through fare" is set for the whole journey, rather than charging the separate fares applying for each individual flight coupon, and this through fare is often lower than the sum of these separate fares.

The interline system could not operate efficiently unless the participants involved in that interlined carriage had an agreed mechanism for sharing the revenue collected by the ticketing (validating) carrier. The validating airline collects the total fare from the passenger, then this fare is split into coupon prorated amounts thanks to the Proration system so that settlements on these coupon prorated amounts can be made with other carriers (participating airlines).

The Proration idea is to share the ticket fare into coupon-prorated amounts either thanks to public agreements governed by IATA, which are the Multilateral Prorate Agreements (MPA) or thanks to bilateral private agreements signed by partners airlines, which are the Special Prorate Agreements (SPA).

The e-ticket can be subject to several actions during its lifetime. In particular, after issuance the passenger can return to the travel agency or to the airline agent in order to:
- Exchange his e-ticket or part of the itinerary of the ticket (so-called coupon) for a new ticket when destinations or fares have changed.
- Refund his e-ticket if he no longer wishes to use it, or part of the itinerary of a ticket (so called coupon) in case some coupons are already used (aka flown).

The request for exchange (resp. refund) is sent to the validating airline's ticketing server. Both requests may be subject to a fee corresponding to penalty linked to exchange/refund process handling. As well, either the full ticket or part of the ticket's itinerary (coupons) can be exchanged / refunded. These requests can be performed either manually by the agent, or via automated tools.

Today, rules are filed by publishing airlines (i.e. marketing carriers) inside the reservation system in order to statically attach a stated refund value, which is ticket context less to a given route for the exchange/refund process. This stated refund value (ticket context less) is not at all related to the prorated amount (ticket context full) of this coupon, especially in the case of the SPA where the prorated amounts agreed between airlines are likely to be the most different from the stated refund values.

Typically, in an example itinerary the Nice-Paris-New York priced $1000, if the Nice-Paris (prorated amount gave $500) was flown by an other airline and Paris-New York had a stated value for refund of $700 (rule filed by the airline for Paris-New York for that class is $700) the refund of the Paris New York sector would cause a loss to the validating airline of $200 in the Refund transaction. Indeed, the validating airline would give $700 to the passenger for the refund of the Paris-New York plus $500 (prorated amount for the Nice-Paris) to the airline operating the Nice-Paris, which makes $1200 whereas it just received $1000 at issuance time.

The present invention wishes to prevent such a loss by a validating airline.

### BRIEF SUMMARY OF THE INVENTION

The invention solves the issues of loss by a validating airline in the partial exchange/refund process for the interline tickets by relying on ticket's coupon actual prorated amount.

Then, authorizing the refund or the exchange upon the validating airline ticket's balance is equal or greater than a predefined threshold or triggering an event upon the validating carrier ticket's balance is less than a predefined threshold.

If an event is triggered for the refund case proposing a new refund value be set to the prorated amount in response to the triggered event. Then setting the new refund value to the prorated amount upon the acceptance and authorizing the refund for the new refund value.

Within the system, the stated value of a portion is unrelated to the total itinerary value whereas the prorated value is based both on the itinerary and on the itinerary value.

One of ordinary skill in the art will understand that the above method may also be carried out by a series of programmed processor with software units able to perform a given task of the method.

The invention also relates to a computer program product comprising instructions capable of performing the steps of the method.

### BRIEF DESCRIPTION OF THE SEVERAL VIEWS OF THE DRAWINGS

FIG. 1 is a system diagram of the invention.
FIG. 2 is a diagram of the purchase and exchange or refund process of the invention.
FIG. 3 is a diagram of the plurality of sources of rules used in proration.
FIG. 4 is a flowchart of a software system implementing the invention.
FIG. 5 is a further flow chart of a software system implementing the invention upon a failure to authorize an exchange/refund.
FIGS. 6A and 6B are examples of tickets for multi-carrier, multi-city itinerary with exchange or refund.

### DETAILED DESCRIPTION OF THE INVENTION

The following paragraphs will specifically describe the audit of a partial change by a validating airline for an interline itinerary, wherein they are to be understood as being merely for the purpose of description and not of limitation.

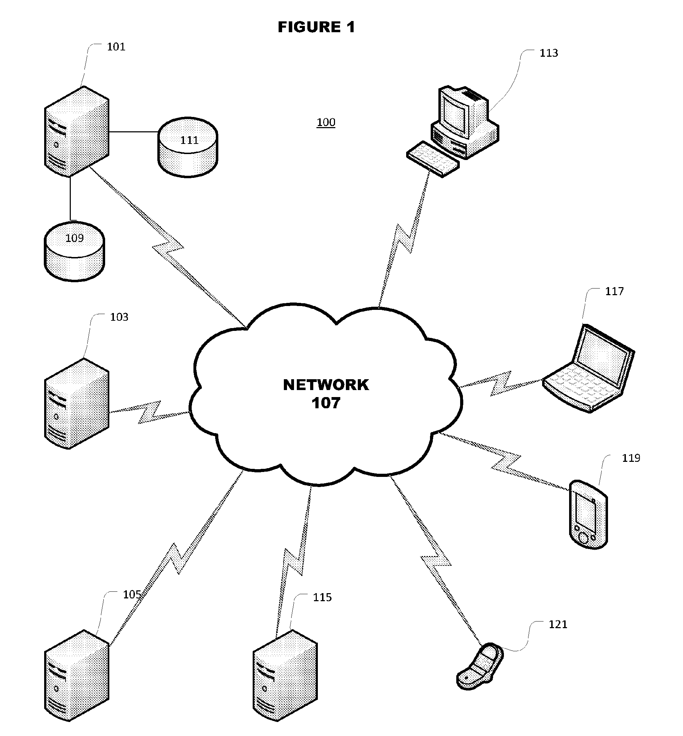

Fig. 1 illustrates a system according to the invention. System 100 includes a plurality of airline servers 101, 103 and 105 for a plurality of airlines. Servers 101, 103 and 105 are connected via network 107 such as the internet or an intranet. Further, servers 101, 103 and 105 may include as exemplified in server 101, reservations database 109 and proration business rules database 111. It is understood but not shown that servers 103 and 105 will include similar databases 109 and 111.

Request for refund or exchange of an itinerary may be received at servers 101, 103 and 105 via network 107 from a travel agent computer 113 or web server 115 connected to users via network 107. It is further understood that web server 115 may be contacted via a user including travel agent 113 via laptop 117, PDA 119 or other network capable device such a smart phone 121.

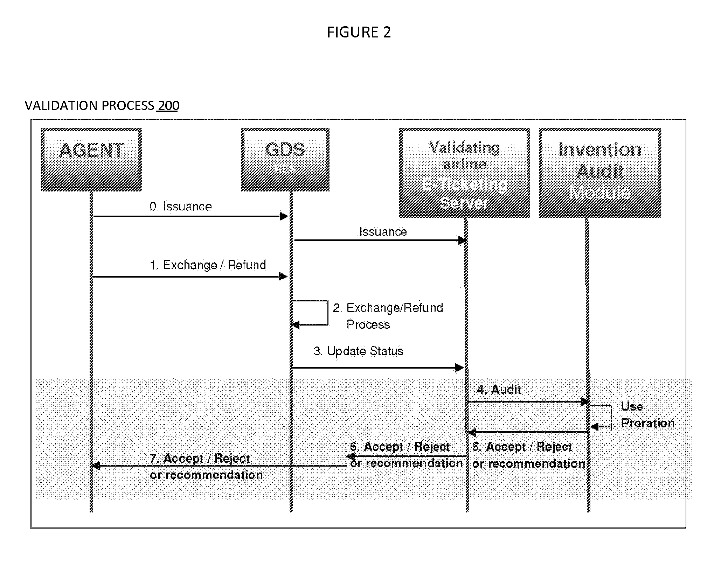

Fig. 2 illustrates the purchase and refund or exchange of a purchased ticket according to the current invention. In step 0 an AGENT requests the issuance of interline itinerary. The issuance is performed via Global Distribution System (GDS) and validating E-Ticketing Server (ETS) of a validating airline. The plurality of servers 101, 103, 105 and 115 may form the GDS and ETS singularly or in any combination. In step 1 an AGENT in an automated or manual fashion request a partial ticket change for a ticket by requesting the refund to the GDS. In step 2 the partial ticket change process is performed. In step 3, the GDS request an update of the status and forward that update to the ETS. In step 4, the ETS in turn performs an audit of the value of the change requested by forwarding the request value along with information of the itinerary to an Audit module. The Audit module performs an audit using proration and determines whether the partial ticket change request should be accepted, rejected or another value should be suggested to the agent. This information is returned to the ETS in step 4. Further to the GDS' in step 6 which in turn returns the information of accept, reject or suggestion to the AGENT in step 7.

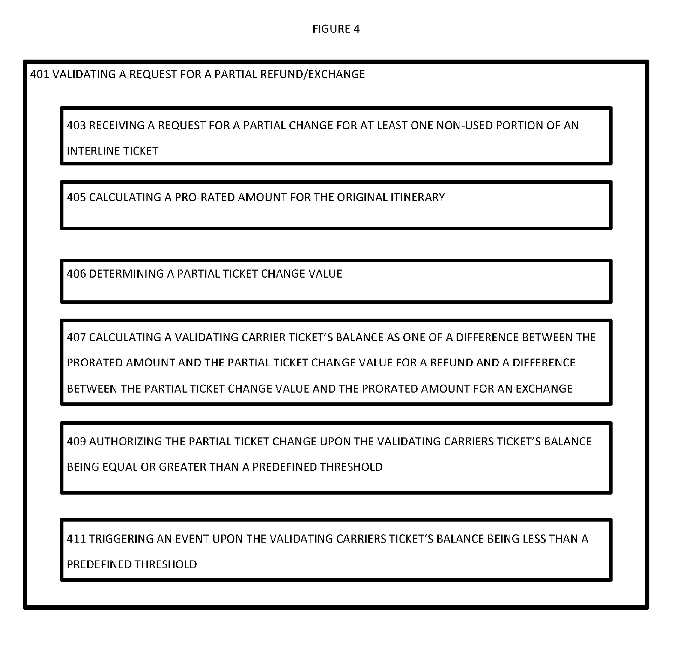

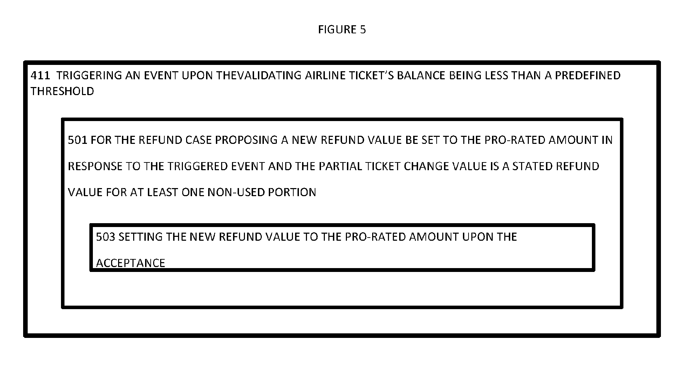

Figures 4 and 5 implement the method in software. As discussed above, the method may be executed as a computer program by any of a plurality of servers. It is well known in the art that such servers contains processors for executing computer programs, memory, peripherals for storing data and computer programs, as well as network cards for connecting to other servers, servers printers and displays.

In auditing method 401 is implemented by having a server receive 403 a request for a partial ticket change for at least one non-used portion of an interline ticket. It is further understood that such a request may be received from a travel agent or received automatically via an e-ticketing system when a request for the change is made upon a ticketing change request. The amount of the request may be an automatic amount (in case of automatic change process) or a manual amount inputted by a travel agent (in case of manual change process).

Next, the proration engine calculates, 405, a prorated amount for the original itinerary and determines 406 a partial ticket change value. For the refund case, the partial ticket change value is the stated refund value for the at least one non-used portion. For the exchange case, the partial ticket change value is the prorated amount for the new itinerary. The prorated amount is determined based on a set of business rules stored in the proration business rules database 111.

A next step, calculates 407, a validating carrier ticket's balance. For the refund case, it is equal to the difference between the prorated amount and the partial ticket change value. For the exchange case, it is the opposite.

If, 409, the validating carriers ticket's balance is equal or greater than a predefined threshold, then the partial ticket change is authorized.

However, if 411 the validating carriers ticket's balance is less than a predefined threshold, then trigger an event indicating that the refund or exchange should not be authorized.

Upon the event 411 being triggered, for the refund case, an alternative new refund value can be proposed and the partial ticket change value is a stated refund value for the at least one non-used portion 501. Then the agent or passenger can accept the proposed value then refund is set 503 to the prorated value.

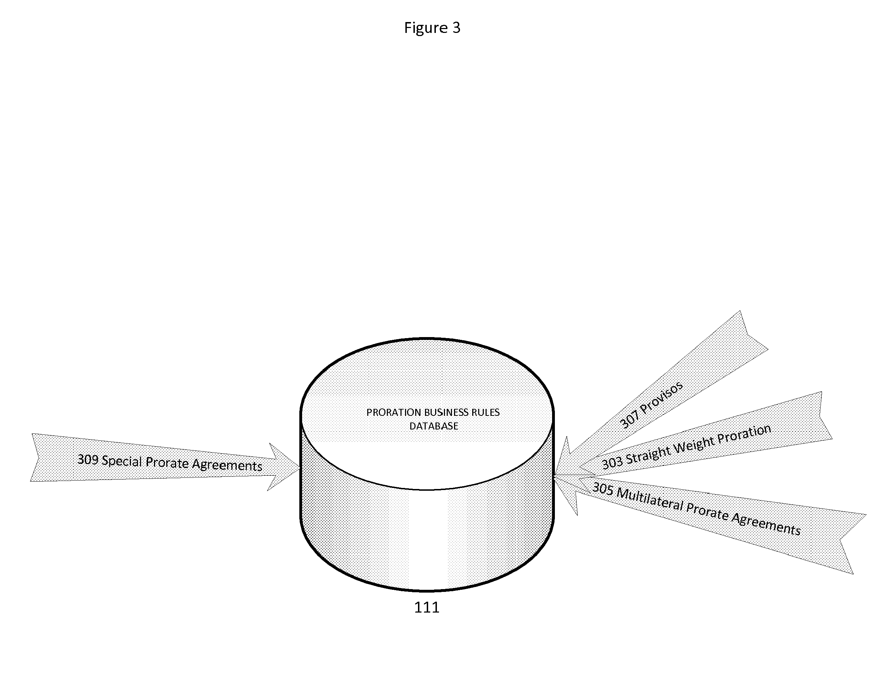

FIG 3 illustrates the plurality of sources of rules used in proration. A first example of a proration factor is straight 303, taking into account the difference of cost between short and long-haul flights, but also between different geographical areas of the world (this is known as "area weighting").

The same calculation method is kept, using the prorate factors instead of the mileage. This is known as a "straight rate proration" (SRP), and is part of International Air Transport Association (IATA) proration rules known as Multilateral Prorate Agreements 305 (MPA). These rules are summarized in a book published every quarter by IATA, the Prorate Manual Passenger (PMP).

But in some cases, there was still unacceptable revenue differences between all the carriers involved in the journey. The straight rate proration has some drawbacks, amongst which the fact that each carrier will receive only a proportion of the original ticket amount. In other terms, it means that the revenue of the participating carrier (the airline that operates the flight on which the passenger boards) depends on the ticket amount, which is fixed by the validating airline. This has led to the creation of the Provisos 309: in a nutshell, this system is not based on a percentage of the total amount, but on some "flat amounts" published by the participating airlines. These Provisos are also part of the MPA.

More precisely, it is a complex system composed of:
- base amounts: this amount is linked to a segment (board point/off point) and a class of service (first, business, economy): this is also often referred to as "sector fare"
- and provisos : this is a set of rules to determine if the base amount is applicable and at which percentage: this percentage may depend on (i) the class of service (first, business, economy), (ii) the type of fare for the whole journey: the airline may for example require 100% of the base amount for unrestricted fares, and 80% of the base amount for low promotional fares, and (iii) the type of journey, e.g. whether it is wholly within Europe, or part of a journey between Europe and North America, or originating in UK,....

Finally, airlines can use Special Prorate Agreements 309 (SPA), in opposition with MPA, in order to share the revenue differently in a way defined in the agreement. These SPA are bilateral private agreements that prevail over any other agreements. They can be applied only when the signatories of the SPA are the only ones involved in the itinerary.

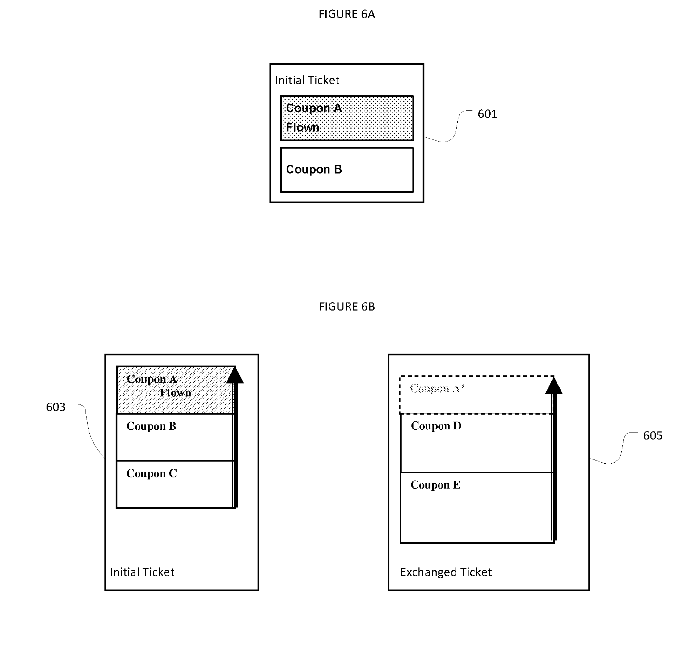

Fig. 6A is an example of a ticket and request according to the present invention. An agent issues a ticket 601 for 2 segments on validating airline V: coupons A, and B, for a total amount of $1000 received by airline V. As such it is clear that a interline itinerary is a multi-carrier, multi-city-pair travel itinerary.

Coupon A is flown by operating carrier O.

The passenger decides to refund his remaining segment B. Agent performs the refund transaction for a stated value of $700 (Step 401).

When the validating airline receives the refund request, it forwards (step 403) it to an Auditing module which prorates the initial ticket $1000 for coupons A and B (step 405). Coupon A is prorated for e.g. $400 (a proviso was filed on this short segment). The auditing module compares validating airline balance: by computing the initial ticket amount - flown coupon value - refunded ticket value. $1000 - $400 - $700 = -$100 <0 As balance is negative the refund amount is rejected (step 409).

In addition to checking that a balance does not go negative having a tolerance of zero a negative value can be used as a tolerance margin to give a larger buffer for a validating airline.

In the second example of fig. 6B, the agent issues a ticket for three segments 603 on validating airline V: coupons A, B, and C for a total amount of $1000 received by airline V.

Coupon A is flown by operating carrier O.

The passenger decides to exchange his remaining two segments B and C for new segments D and E. Agent performs the exchange transaction and new ticket price is $900 (step 401).

When validating airline receives the exchange request (step 403) it forwards it to Auditing module which prorates the initial ticket $1000 for all coupons A, B, and C. Coupon A is prorated for e.g. $200 (Step 405).

The Auditing Module will also prorate the new ticket 605 through the full itinerary (Coupons A, D, E) with the new ticket price. A new substitute A is A' the value of the coupon A in the new itinerary (A' = new price ticket - prorated value coupon D - prorated value coupon E)

The auditing module compares validating airline balance:
- A' - A = $300 - $200 = $100 >0

As balance is positive the exchange amount is accepted (Step 407).

In an alternative scenario, imagine that D and E are operated by other airlines, they would bill the validating airline for $600 ($900 - $300). Moreover, the operating carrier O would have already billed $200 for the coupon A in the original ticket.

The total balance for the validating airline is: $1000 (original ticket amount) -$200 (amount given to airline O) -$600 (amount given to operating airlines for coupons D and E) -$100 (residual value given to passenger) = $100 so the exchange would have been accepted as the balance is positive (Step 407).

If the coupon A in the new ticket would have a prorated value of $150 (A'), the amount given to operating airlines for coupons D and E would be $750 and in this case, the validating airline would have a negative balance:
- $1000 - $200 - $750 -$100 = -$50

So the exchange would have been rejected (Step 409).

As described above, according to the invention, it is possible to validate a request for refund or exchange.

## Claims

1. A method for auditing the value of a partial ticket change transaction for an interline ticket issued for an itinerary in a networked travel reservation system including programmed processor performing the steps of the method, the method comprising:
- receiving a request for a partial ticket change for at least one non-used portion of an interline ticket;
calculating a prorated amount for all the portions of the original itinerary;
- upon the request being a refund setting a partial ticket change value as stated refund value for at least one non-used portion of the itinerary and calculating a validating carrier ticket's balance as one of a difference between the prorated amount and the partial ticket change value;
- upon the request being an exchange setting the partial ticket change value as the prorate amount for the new itinerary and calculating the validating carrier ticket's balance as a difference between the partial ticket change value and the prorated amount for an exchange;
- authorizing the partial ticket change transaction upon the validating carriers ticket's balance being equal or greater than a predefined threshold; and
- triggering an event upon the validating carriers ticket's balance being less than a predefined threshold.

2. The method of claim 1, wherein the interline ticket is a multi-carrier, multi-city-pair travel itinerary ticket.

3. The method of claim 1, wherein the request is for refund and wherein the partial ticket change value is a stated refund value for the at least one non-used portion.

4. The method of claim 3, further comprising:
- proposing a new refund value be set to the prorated amount in response to the triggered event.

5. The method of claim 4, further comprising:
- setting the new refund amount in response to the triggered event.

6. The method of claim 3, wherein the stated refund value of a portion is unrelated to the total itinerary value.

7. The method of claim 6, wherein the refund value is the stated refund value for the portion requested to refund.

8. The method of claim 1, wherein the prorated amount is based upon one of public agreements and agreements between participating carriers for a value for a given flight segment.

9. The method of claim 1, wherein the auditing is performed by the carrier which sold the interline ticket.

10. The method of claim 9, wherein the at least one non used portion is a portion to be travelled by other than the carrier performing the auditing.

11. The method of claim 1, wherein the request is for exchange and wherein the partial ticket change value is a prorated amount for a new itinerary.

12. A system for auditing a request for change for an interline ticket, comprising:
- a requesting computer comprising a processor programmed to issue, change or cancel at least one portion of the interline ticket;
- a validating carrier computer comprising a processor programmed to audit the value of the request for the change for at least one non-used portion of the interline ticket;
- a unit of the requesting computer requesting a partial change of a portion of the interline ticket by transmitting the request to the validating carrier computer;
- a unit of the validating carrier computer receiving the request for a partial change from the requesting computer, the request to change at least one non-used portion of the interline ticket;
- a unit of the validating carrier computer calculating the prorated amount for the itinerary;
- a unit of the validating carrier computer determining a partial ticket change value;
- a unit of the validating carrier computer calculates a validating carrier ticket's balance as one of a difference between the prorated amount and the partial ticket change value for a refund and a difference between the partial ticket change value and the prorated amount for an exchange;
- a unit of the validating carrier computer approving the issuing of the change by the agent computer upon a validating carrier ticket's balance being equal or greater than a predefined threshold;
- a unit of the agent computer issuing the change upon the validating carrier computer approving the change; and
- a unit of the validating carrier computer triggering an event upon the difference between validating carriers ticket's balance being less than a predefined threshold.

13. The system of claim 12, wherein the interline ticket is a multi-carrier, multi-city-pair travel itinerary ticket.

14. The system of claim 12, wherein the request is for refund and wherein the partial ticket change value is a stated refund value for the at least one non-used portion.

15. The system of claim 14, wherein upon a refund request further comprising:
- a unit of the validating carrier computer transmitting to the requesting computer the prorated amount as a new refund value in response to the triggered event.

16. The system of claim 14, wherein the stated refund value of a portion is unrelated to the total itinerary value.

17. The system of claim 16, wherein the refund value is original itinerary value minus the stated refund value of the at least one traveled portion of the interline ticket.

18. The system of claim 12, wherein the prorated amount is based upon one of public agreements and agreements between participating carriers for a value for a given flight segment.

19. The system of claim 12, wherein the auditing is performed by the carrier which sold the interline ticket.

20. The method of claim 1, wherein the predefined threshold is set to 0.

21. The method of claim 1, wherein the predefined threshold is set to a negative value used as a tolerance margin.

22. The system of claim 12, wherein the predefined threshold is set to 0.

23. The system of claim 12, wherein the predefined threshold is set to a negative value used as a tolerance margin.

24. The system of claim 12, wherein the request is for exchange and wherein the partial ticket change value is a prorated amount for a new itinerary.
